# EUROPEAN PATENT SPECIFICATION

(11) **EP 2 868 940 B1**
(45) Date of publication and mention of the grant of the patent: **07.03.2018**
(21) Application number: 14190336.9
(22) Date of filing: 24.10.2014
(51) Int. Cl.: F16D 1/076, F16B 35/04, F16D 1/033, F16B 19/02

(54) **Dowel element**
Dübelelement
Élément de cheville

(30) Priority: 29.10.2013 US 201314066153
(43) Date of publication of application: 06.05.2015
(73) Proprietor: Hamilton Sundstrand Corporation, Windsor Locks, CT 06096-1010 (US)
(72) Inventor: Carvalho, Paul A., Hadley, MA 01035 (US); Ventura, Peter, Enfield, CT 06082 (US)
(74) Representative: Leckey, David Herbert

(56) References cited:
- DE-A1- 2 603 996
- US-A- 3 455 587
- US-A1- 2010 190 560
- US-A1- 2013 220 071

## Description

### BACKGROUND OF THE INVENTION

The subject matter disclosed herein relates to a dowel element and, more particularly, to a dowel bolt or dowel pin with an anti-fretting relief.

Dowel bolts (and dowel pins) are used to fasten structural components together in an axial direction and to provide for an ability to transmit shear along the transverse dimension. Indeed, they are often used, for example, to couple a hub to an engine shaft in an aircraft engine. Under cyclic loads, however, it has been found that there may be a zone of the dowel bolt that will see sufficient load and motion to generate fretting damage. In the case of the hub and engine shaft coupling, this zone is located at a particular part of the dowel bolt in accordance with the direction of the rotation of the engine shaft.

It has been seen that if the fretting damage is in a cyclic tensile stress field, premature fatigue failure of the dowel bolt may occur due to significant reductions in fatigue strength due to the fretted surface condition.

US2013/0220071 discloses a connecting rod bolt having locating features. US3455587 discloses an antifretting assembly of the prior art.

### BRIEF DESCRIPTION OF THE INVENTION

In accordance with the invention, there is provided a dowel element as set forth in claim 1.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is an end view of a series of dowel elements in a hub and engine shaft coupling;
FIG. 2 is a schematic side view of a dowel element provided as a dowel bolt in a hub and engine shaft coupling along line A-A of FIG. 1;
FIG. 3 is a cross-sectional view of a portion of the dowel element along lines B-B of FIG. 2;
FIG. 4 is a cross-sectional view of another portion of the dowel element along lines C-C of FIG. 2;
FIG. 5 is a perspective view of the dowel element of FIG. 2 in accordance with embodiments; and
FIG. 6 is a schematic side view of a dowel element provided as a dowel pin in a hub and engine shaft coupling.

The detailed description explains embodiments of the invention, together with advantages and features, by way of example with reference to the drawings.

### DETAILED DESCRIPTION OF THE INVENTION

As will be described below, a dowel element is provided and includes an anti-fretting relief in an area of expected fretting damage. This fretting relief is designed to avoid contact between the dowel element and the mating part in the area where the fretting conditions exist. This feature can be indexed to the proper position since dowel elements are normally press-fit in the mating part where the fretting condition occurs. The feature is a slight undercut of approximately 0.005 inches (0.127 mm), which will be sufficient to avoid the contact while not resulting in a significant structural stress concentration due to the discontinuity in the surface of the dowel element diameter. It is expected that the dowel element with the anti-fretting relief will result in an extended lifetime of the dowel element and will permit the avoidance of costly replacements.

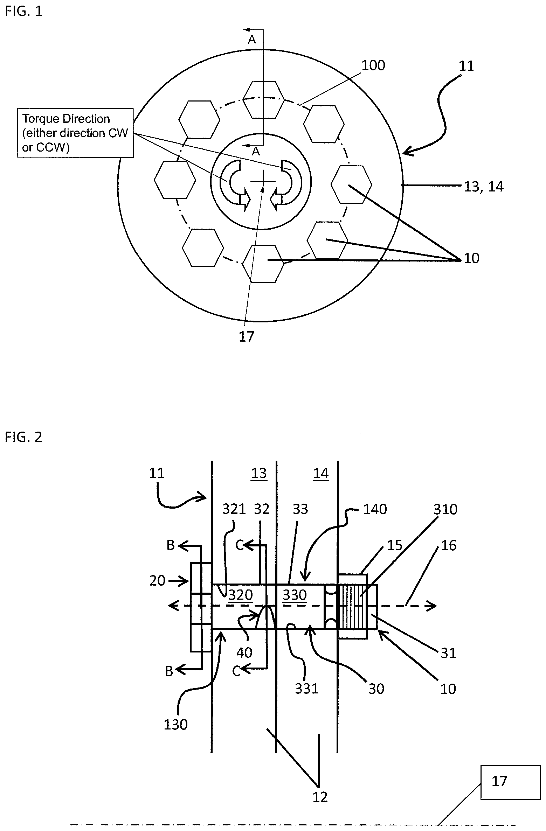

With reference to FIGS. 1-5, a dowel element 10 is provided and is configured for use in, for example, a coupling 11 of a dynamic or electro-dynamic machine 12. In one exemplary embodiment, which will be described herein for the purposes of clarity and brevity, the coupling 11 may be provided between a first mated element, such as a hub element 13, and a second mated element, such as an engine shaft 14. The engine shaft 14 may be, in turn, coupled to a right or left turning propeller and the turning of the propeller causes torque to be applied to the coupling 11 in first or second directions, respectively.

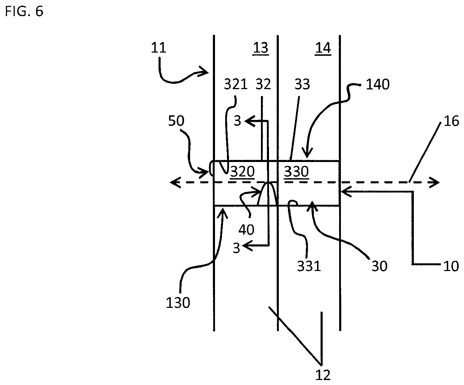

The dowel element 10 may be provided as a dowel bolt (see FIG. 2) or a dowel pin (see FIG. 6). In the former case, where the dowel element 10 is a dowel bolt, the dowel element 10 includes a head portion and threading to be described below and cooperates with a nut 15 to tighten the first and second mated elements (i.e., the hub element 13 and the engine shaft 14) together. In the latter case, wherein the dowel element 10 is a dowel pin, the dowel element 10 does not include a head portion or threading. In either case, the dowel element 10 further serves to transmit the applied torque along the assembly centerline 17, which may be defined in substantially in parallel with a longitudinal axis 16 of the dowel element 10.

As shown in FIG. 1, the coupling 11 may be provided with a plurality of dowel elements 10 arrayed in a circular configuration 100 about the assembly centerline 17. The dowel elements 10 are illustrated as being dowel bolts but it is to be understood that dowel elements 10 could be provided as dowel bolts, dowel pins, a mixture of dowel bolts and dowel pins or a mixture of regular bolts and dowel pins. The circular configuration is not required, however, and it is understood that other regular and irregular configurations are possible. In each configuration, the coupling 11 is disposed to experience an application of torque in either the clockwise or counter clockwise direction.

As shown in FIG. 2, the hub element 13 is formed to define a through-hole 130 at the coupling 11 and the engine shaft 14 is similarly formed to define a through-hole 140 at the coupling 11. As shown, the dowel element 10 is illustrated as a dowel bolt and includes a head portion 20 and a shank portion 30. The head portion 20 may be provided with a polygonal or angular shape and is wider than the through-holes 130 and 140. The shank portion 30 is sized to be press-fit in the through-hole 130 and clearance fit in the through hole 140 and extends from the head portion 10 along the longitudinal axis 16. The shank portion 30 includes an engagement part 31, a first mating part 32 and a second mating part 33. The first and second mating parts 32 and 33 are sequentially arranged between the head portion 20 and the engagement part 31 with the first mating part 32 relatively close to the head portion 20 and the second mating part 33 relatively remote from the head portion 20.

As noted above, where the dowel element 10 is provided as a dowel pin, the head portion 20 and the engagement part 31 would not be included.

In the case of the dowel bolt or the dowel pin, the dowel element 10 further includes an anti-fretting relief 40. In accordance with various embodiments, the anti-fretting relief 40 may be defined at one of the first and second mating parts 32 and 33. For the purposes of clarity and brevity, however, it will be assumed that the anti-fretting relief 40 is defined at the first mating part 32.

Where the dowel element 10 is provided as the dowel bolt and is installed in the coupling 11, the shank portion 30 extends through the through-holes 130 and 140 such that the engagement part 31 is exposed beyond the engine shaft 14 and such that the first mating part 32 is disposed to mate with the hub element 13 with a press fit and the second mating part 33 is disposed to mate with the engine shaft 14 with a clearance fit. In accordance with embodiments, a thickness of the first mating part 32 along the longitudinal axis 16 is substantially similar to a width of the hub element 13 and a thickness of the second mating part 33 along the longitudinal axis 16 is substantially similar to a width of the engine shaft 14. In addition, a diameter of the first mating part 32 may be slightly larger than a width of the through-hole 130 thereby defining the press fit relationship between the first mating part 32 and the hub element 13. By contrast, a diameter of the second mating part 33 may be slightly smaller than a width of the through-hole 140 thereby defining the clearance fit between the second mating part 33 and the engine shaft 14. As such, a first exterior facing surface 320 of the first mating part 32 tightly abuts an interior facing surface 321 of the hub element 13 except at the anti-fretting relief 40 and an exterior facing surface 330 of the second mating part 33 loosely abuts or is separate from an interior facing surface 331 of the engine shaft 14.

The engagement part 31 may include exterior threading 310 that is engageable with interior threading of the nut 15 to draw the head portion 20 toward the nut 15. With the head portion 20 abutting an exterior surface of the hub element 13 and the nut 15 abutting an exterior surface of the engine shaft 14, this tightening serves to tighten the hub element 13 and the engine shaft 14 toward one another.

Due to the rotating of the propeller to which the engine shaft 14 is connected, a cyclic loading field may be defined at the coupling 11 and, more particularly, at the location where the anti-fretting relief 40 is defined. As such, in the absence of the anti-fretting relief 40, premature fatigue failure of the dowel element 10 could occur due to fretting damage caused by the cyclic loading field and the cyclic tensile field in the dowel bolt. However, since the anti-fretting relief 40 is provided in this location, contact between the hub element 13 and the first mating part 32 at the anti-fretting relief 40 is eliminated while the first exterior facing surface 320 continues to abut the interior facing surface 321 of the hub element 13. The elimination of this contact prevents the fretting damage associated with premature fatigue failure.

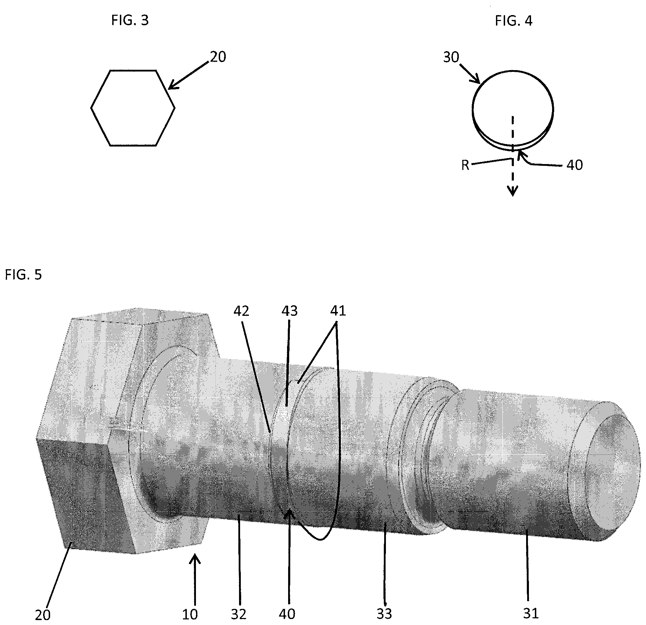

As shown in FIGS. 1- 5, the anti-fretting relief 40 may be defined along an interface between the first and second mating parts 32 and 33 and includes first and second edges 41, a circumferential sidewall 42 and a second exterior surface 43. The first and second edges 41 delimit opposite circumferential ends of the anti-fretting relief 40 and the circumferential sidewall 42 delimits an axial end of the anti-fretting relief 40, which is opposite the axial end of the first mating part 32 where the first mating part 32 interfaces with the second mating part 33. The second exterior surface 43 runs along the first and second edges 41 and the circumferential sidewall 42 and is formed to be recessed from the first exterior surface 320 and from the interior facing surface 321 of the hub element 13 in a radial dimension R (see FIG. 4).

In accordance with embodiments, the first exterior surface 320 may have a substantially cylindrical shape. The anti-fretting relief 40 extends along an arc-segment of the first exterior surface 320. This arc-segment may be approximately 120 degrees. In addition, the anti-fretting relief 40 may be approximately 0.005 inches (0.127 mm) deep (i.e., along the circumferential sidewall 42) and 0.11 inches (0.279 mm) wide (i.e., along the first and second edges 41).

In accordance with further aspects, a method of providing a dowel element with fretting relief as described above is provided and includes forming the dowel element with a head portion and a shank portion extending from the head portion and defining along the shank portion an engagement part and first and second mating parts sequentially arranged between the head portion and the engagement part to mate with first and second mated elements, respectively, with the engagement part and the head portion disposed to tighten the first and second mated elements together. The method further includes defining an anti-fretting relief along one of the first and second mating parts where a fretting zone is expected to exist due to mating between the first and second mating parts and the first and second mated elements, respectively. In accordance with embodiments, the anti-fretting relief may be machined. In accordance with further embodiments, the method may include determining where the fretting zone is expected to exist by for example inspecting a used dowel element.

With reference to FIG. 6, the description provided above generally relates to dowel elements 10 provided as a dowel bolts but it is to be understood that the dowel elements 10 may be provided as dowel pins as well. In such cases, the dowel element 10 would not include the head portion 20 or the engagement part 31 and would not be cooperative with nut 15. Nevertheless, the dowel element 10 provided as a dowel pin would still include a first mating part 32 disposed with a press-fit with hub element 13 and second mating part 33 disposed with a clearance fit with engine shaft 14. As above, the anti-fretting relief 40 would remain disposed at the first mating part 32.

In accordance with aspects, while a dowel bolt is threaded to be clamped together, a dowel pin can be used to transmit torque without clamping. In the case of dowel pin usage, regular bolts would clamp the parts together and the dowel pins would transmit torque.

Where the dowel element 10 is provided as a dowel pin, the dowel element 10 may include a timing device 50 so that the anti-fretting relief 40 can be correctly oriented. Where the dowel element 10 is provided as a dowel bolt, the timing device 50 may be provided in the head portion 20 or the engagement part 31.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A dowel element (10), comprising:
a shank portion (30) comprising first and second mating parts (32, 33),
one of the first and second mating parts (32, 33) comprising a first exterior surface (320) **characterised in that** the first exterior surface (320) is formed to define a single anti-fretting relief (40) including a second exterior surface (43) recessed from the first exterior surface (320) in a radial dimension, wherein the single anti-fretting relief (40) extends only along a circumferential arc-segment of the first exterior surface (320).

2. The dowel element according to claim 1, wherein the single anti-fretting relief (40) is defined at an interface of the first and second mating parts (32, 33).

3. The dowel element according to claim 1 or 2, wherein the single anti-fretting relief (40) extends only along a 120 degree circumferential arc-segment of the first exterior surface (320).

4. The dowel element according to claim 3, wherein the single anti-fretting relief (40) is approximately 0.005 inches (0.127 mm) deep and 0.11 inches (0.279 mm) wide.

5. The dowel element according to any preceding claim, further comprising:
a head portion (20) from which the shank portion (30) extends; and
an engagement part (31) disposed at an end of the shank portion (30) such that the first and second mating parts (32, 33) are sequentially arranged between the head portion (20) and the engagement part (34).

6. The dowel element according to claim 5, wherein the head portion (20) is polygonal, the engagement part (31) comprises threading and the one of the first and second mating parts (32, 33) is closer to the head portion (20) than the other.

7. The dowel element of claim 1, being a dowel bolt, comprising:
a head portion (20);
said shank portion (30) extending from the head portion (20) and comprising an engagement part (31) and said first and second mating parts (32, 33) sequentially arranged between the head portion (20) and the engagement part (31) to mate with first and second mated elements (13, 14), respectively, with the engagement part (31) and the head portion (20) disposed to tighten the first and second mated elements (13, 14) together,
the first exterior surface (320) for abutment with an interior surface (321) of the corresponding one of the first and second mated elements (13, 14) and being formed to define the single anti-fretting relief including the second exterior surface (43) recessed from the first exterior surface (320) and the interior surface (321) in a radial dimension.

8. The dowel element according to claim 7, wherein the head portion (20) is polygonal and the engagement part (31) comprises threading, which is engageable with a nut (15) to draw the head portion (20) toward the nut (15) to tighten the first and second mated elements (13, 14) together.

9. The dowel element according to claim 7 or 8, wherein the one of the first and second mating parts (32, 33) is closer to the head portion (20) than the other.

10. The dowel element according to any of claims 7 to 9, wherein the single anti-fretting relief (40) is defined at an interface of the first and second mating parts (32, 33) With a circumferential wall (42) opposite an axial end of the first mating part (32) at the interface.

11. The dowel element according to any of claims 7 to 10, wherein the single anti-fretting relief is approximately 0.005 inches (0.127 mm) deep and 0.11 inches (0.279 mm) wide.

12. Dynamic machine (12) with a coupling (11), the coupling comprising:
first and second mated elements (13, 14); and
at least one dowel element (10) of any preceding claim;
wherein the first and second mating parts (32, 33) of the or each dowel element (10) mate with the first and second mated elements respectively

13. Dynamic machine (12) with a coupling (11), the coupling comprising:
first and second mated elements (13, 14);
one or more dowel pins in accordance with the dowel element of any of claims 1 to 4 and/or one or more dowel bolts in accordance with the dowel element of any of claims 5 to 11; and
a nut (15) disposed for engagement with each of the dowel bolts (10) such that the corresponding heads (20) are configured to be drawn toward the nuts (15) to tighten the first and second mated elements (12, 13) together,
wherein the first and second mating parts (32, 33) of each dowel bolt (10) and each dowel pin (10) mate with the first and second mated elements (13, 14), respectively.

## Patentansprüche

1. Dübelelement (10), umfassend:
einen Schaftabschnitt (30), umfassend ein erstes und zweites zusammenpassendes Teil (32, 33),
wobei eines von dem ersten und zweiten zusammenpassenden Teil (32, 33) eine erste Außenfläche (320) umfasst, **dadurch gekennzeichnet, dass** die erste Außenfläche (320) geformt ist, um eine einzelne Anti-Fretting-Stütze (40) zu definieren, die eine zweite Außenfläche (43) beinhaltet, die gegenüber der ersten Außenfläche (320) in einer radialen Abmessung zurückgesetzt ist, wobei sich die einzelne Anti-Fretting-Stütze (40) lediglich entlang eines umlaufenden Bogensegments der ersten Außenfläche (320) erstreckt.

2. Dübelelement nach Anspruch 1, wobei die einzelne Anti-Fretting-Stütze (40) an einer Schnittstelle des ersten und zweiten zusammenpassenden Teils (32, 33) definiert ist.

3. Dübelelement nach Anspruch 1 oder 2, wobei sich die einzelne Anti-Fretting-Stütze (40) lediglich entlang eines umlaufenden 120-Grad-Bogensegments der ersten Außenfläche (320) erstreckt.

4. Dübelelement nach Anspruch 3, wobei die einzelne Anti-Fretting-Stütze (40) ungefähr 0,005 Zoll (0,127 mm) tief und 0,11 Zoll (0,279 mm) breit ist.

5. Dübelelement nach einem vorhergehenden Anspruch, ferner umfassend:
einen Kopfabschnitt (20), von dem sich der Schaftabschnitt (30) erstreckt; und
ein Eingriffsteil (31), das an einem Ende des Schaftabschnitts (30) angeordnet ist, sodass das erste und zweite zusammenpassende Teil (32, 33) sequentiell zwischen dem Kopfabschnitt (20) und dem Eingriffsteil (34) angeordnet sind.

6. Dübelelement nach Anspruch 5, wobei der Kopfabschnitt (20) polygonal ist, das Eingriffsteil (31) Gewinde umfasst und das eine von dem ersten und zweiten zusammenpassenden Teil (32, 33) näher an dem Kopfabschnitt (20) ist als das andere.

7. Dübelelement nach Anspruch 1, das ein Dübelbolzen ist, umfassend:
einen Kopfabschnitt (20);
den Schaftabschnitt (30), der sich von dem Kopfabschnitt (20) erstreckt und ein Eingriffsteil (31) und das erste und zweite zusammenpassende Teil (32, 33) umfasst, die sequentiell zwischen dem Kopfabschnitt (20) und dem Eingriffsteil (31) angeordnet sind, um sich jeweils mit ersten und zweiten angepassten Elementen (13, 14) zu verbinden, wobei das Eingriffsteil (31) und der Kopfabschnitt (20) angeordnet sind, um das erste und zweite angepasste Element (13, 14) zusammenzuziehen,
die erste Außenfläche (320) zur Angrenzung an eine Innenfläche (321) des entsprechenden von dem ersten und zweiten angepassten Element (13, 14) und geformt, um die einzelne Anti-Fretting-Stütze zu definieren, welche die zweite Außenfläche (43) beinhaltet, die gegenüber der ersten Außenfläche (320) und der Innenfläche (321) in einer radialen Abmessung zurückgesetzt ist.

8. Dübelelement nach Anspruch 7, wobei der Kopfabschnitt (20) polygonal ist und das Eingriffsteil (31) Gewinde umfasst, das mit einer Mutter (15) in Eingriff genommen werden kann, um den Kopfabschnitt (20) in Richtung der Mutter (15) zu ziehen, um das erste und zweite angepasste Element (13, 14) zusammenzuziehen.

9. Dübelelement nach Anspruch 7 oder 8, wobei das eine von dem ersten und zweiten zusammenpassenden Teil (32, 33) näher an dem Kopfabschnitt (20) ist als das andere.

10. Dübelelement nach einem der Ansprüche 7 bis 9, wobei die einzelne Anti-Fretting-Stütze (40) an einer Schnittstelle des ersten und zweiten zusammenpassenden Teils (32, 33) definiert ist, wobei sich eine umlaufende Wand (42) gegenüber einem axialen Ende des ersten zusammenpassenden Teils (32) an der Schnittstelle befindet.

11. Dübelelement nach einem der Ansprüche 7 bis 10, wobei die einzelne Anti-Fretting-Stütze ungefähr 0,005 Zoll (0,127 mm) tief und 0,11 Zoll (0,279 mm) breit ist.

12. Dynamische Maschine (12) mit einer Kupplung (11), wobei die Kupplung Folgendes umfasst:
ein erstes und zweites angepasstes Element (13, 14); und
mindestens ein Dübelelement (10) nach einem vorhergehenden Anspruch;
wobei das erste und zweite zusammenpassende Teil (32, 33) des oder jedes Dübelelements (10) jeweils zu dem ersten und zweiten angepassten Element passen.

13. Dynamische Maschine (12) mit einer Kupplung (11), wobei die Kupplung Folgendes umfasst:
ein erstes und zweites angepasstes Element (13, 14);
einen oder mehrere Dübelstifte gemäß dem Dübelelement nach einem der Ansprüche 1 bis 4 und/oder
einen oder mehrere Dübelbolzen gemäß dem Dübelelement nach einem der Ansprüche 5 bis 11; und
eine Mutter (15), die angeordnet ist, um mit jedem von den Dübelbolzen (10) in Eingriff genommen zu werden, sodass die entsprechenden Köpfe (20) ausgelegt sind, um in Richtung der Muttern (15) gezogen zu werden, um das erste und zweite angepasste Element (12, 13) zusammenzuziehen,
wobei das erste und zweite zusammenpassende Teil (32, 33) jedes Dübelbolzens (10) und jedes Dübelstiftes (10) jeweils zu dem ersten und zweiten angepassten Element (13, 14) passen.

## Revendications

1. Élément de type cheville (10), comprenant :
une partie formant tige (30) comprenant des première et seconde pièces d'accouplement (32, 33),
une des première et seconde pièces d'accouplement (32, 33) comprenant une première surface extérieure (320) **caractérisée en ce que** la première surface extérieure (320) est formée pour définir un relief anti-usure unique (40) incluant une seconde surface extérieure (43) en retrait par rapport à la première surface extérieure (320) dans une direction radiale, dans lequel le relief anti-usure unique (40) s'étend seulement le long d'un segment d'arc circonférentiel de la première surface extérieure (320).

2. Élément de type cheville selon la revendication 1, dans lequel le relief anti-usure unique (40) est défini au niveau d'une interface des première et seconde parties d'accouplement (32, 33).

3. Élément de type cheville selon la revendication 1 ou 2, dans lequel le relief anti-usure unique (40) s'étend seulement le long d'un segment d'arc circonférentiel de 120 degrés de la première surface extérieure (320).

4. Élément de type cheville selon la revendication 3, dans lequel le relief anti-usure unique (40) fait environ 0,005 pouce (0,127 mm) de profondeur et 0,11 pouce (0,279 mm) de large.

5. Élément de type cheville selon une quelconque revendication précédente, comprenant en outre :
une partie formant tête (20) à partir de laquelle s'étend la partie formant tige (30) ; et
une pièce de mise en prise (31) disposée à une extrémité de la partie formant tige (30) de telle sorte que les première et seconde pièces d'accouplement (32, 33) sont agencées en séquence entre la partie formant tête (20) et la pièce de mise en prise (34).

6. Élément de type cheville selon la revendication 5, dans lequel la partie formant tête (20) est polygonale, la pièce de mise en prise (31) comprend un filetage et l'une des première et seconde pièces d'accouplement (32, 33) est plus proche de la partie formant tête (20) que l'autre.

7. Élément de type cheville selon la revendication 1, étant un boulon de type cheville, comprenant :
une partie formant tête (20) ;
ladite partie formant tige (30) s'étendant à partir de la partie formant tête (20) et comprenant une pièce de mise en prise (31) et lesdites première et seconde pièces d'accouplement (32, 33) agencées en séquence entre la partie formant tête (20) et la pièce de mise en prise (31) pour s'accoupler avec les premier et second éléments accouplés (13, 14), respectivement, avec la pièce de mise en prise (31) et la partie formant tête (20) disposées pour serrer ensemble les premier et second éléments accouplés (13, 14),
la première surface extérieure (320) pour la mise en butée avec une surface intérieure (321) de l'élément correspondant des premier et seconds éléments accouplés (13, 14) et étant formée pour définir le relief anti-usure unique incluant la seconde surface extérieure (43) en retrait par rapport à la première surface extérieure (320) et la surface intérieure (321) dans une dimension radiale.

8. Élément de type cheville selon la revendication 7, dans lequel la partie formant tête (20) est polygonale et la pièce de mise en prise (31) comprend un filetage, qui peut être mis en prise avec un écrou (15) pour amener la partie formant tête (20) vers l'écrou (15) pour serrer ensemble les premier et second éléments accouplés (13, 14).

9. Élément de type cheville selon la revendication 7 ou 8, dans lequel l'une des première et seconde pièces d'accouplement (32, 33) est plus proche de la partie formant tête (20) que l'autre.

10. Élément de type cheville selon l'une quelconque des revendications 7 à 9, dans lequel le relief anti-usure unique (40) est défini à une interface des première et seconde pièces (32, 33) avec une paroi circonférentielle (42) opposée à une extrémité axiale de la première pièce d'accouplement (32) au niveau de l'interface.

11. Élément de type cheville selon l'une quelconque des revendications 7 à 10, dans lequel le relief anti-usure unique fait environ 0,005 pouce (0,127 mm) de profondeur et 0,11 pouce (0,279 mm) de large.

12. Machine dynamique (12) avec un raccord (11), le raccord comprenant :
des premier et second éléments accouplés (13, 14) ; et
au moins un élément de type cheville (10) selon une quelconque revendication précédente,
dans lequel les première et seconde pièces d'accouplement (32, 33) de l'élément ou de chaque élément de type cheville (10) s'accouplent respectivement avec les premier et second éléments accouplés.

13. Machine dynamique (12) avec un raccord (11), le raccord comprenant :
des premier et second éléments accouplés (13, 14) ;
un ou plusieurs goujons chevilles selon l'élément de type cheville de l'une quelconque des revendications 1 à 4 et/ou un ou plusieurs boulons chevilles selon l'élément de type cheville de l'une quelconque des revendications 5 à 11 ; et
un écrou (15) disposé pour être mis en prise avec chacun des boulons chevilles (10) de telle sorte que les têtes correspondantes (20) sont configurées pour être amenées vers les écrous (15) pour serrer ensemble les premier et second éléments accouplés (12, 13),
dans lequel les première et seconde pièces d'accouplement (32, 33) de chaque boulon cheville (10) et chaque goujon cheville (10) s'accouplent avec les premier et second éléments accouplés (13, 14) respectivement.
